# EUROPÄISCHE PATENTSCHRIFT

(11) **EP 2 843 666 B1**
(45) Veröffentlichungstag und Bekanntmachung des Hinweises auf die Patenterteilung: **17.08.2016**
(21) Anmeldenummer: 14181494.7
(22) Anmeldetag: 20.08.2014
(51) Int. Cl.: B65D 43/02, G01M 3/04, G21F 5/12

(54) **Behälterdeckel zum Verschließen eines Transport- und/oder Lagerbehälters**
Container lid for closing a transport and/or storage container
Couvercle de récipient destiné à fermer un récipient de stockage et/ou de transport

(30) Priorität: 27.08.2013 DE 102013109280
(43) Veröffentlichungstag der Anmeldung: 04.03.2015
(73) Patentinhaber: Siempelkamp Behältertechnik GmbH, 45473 Mülheim an der Ruhr (DE)
(72) Erfinder: Tragsdorf, Inga Maren, 52078 Aachen (DE); Kienitz, Stefan, 47249 Duisburg (DE); Kollmann, Felix Benedict, 52062 Aachen (DE); Peters, Oliver, 47918 Tönisvorst (DE)
(74) Vertreter: Michalski Hüttermann & Partner Patentanwälte mbB

(56) Entgegenhaltungen:
- GB-A- 2 265 675
- JP-A- 2006 125 905
- US-A- 4 274 007

## Beschreibung

Die Erfindung betrifft einen Behälterdeckel zum Verschließen einer Einfüllöffnung eines Transport- und Lagerbehälters, insbesondere eines Zwischen- und/oder Endlagerbehälters für kontaminierte und/oder aktivierte Stoffe, mit wenigstens zwei an dem Behälterdeckel innenseitig und beabstandet zueinander angeordnete Nuten und wenigstens zwei jeweils in den Nuten angeordneten Dichtungen. Die Erfindung betrifft weiterhin den Transport- und/oder Lagerbehälter umfassend einen einen Behälterboden und wenigstens eine Behälterseitenwand aufweisenden Behälterkörper sowie den Behälterdeckel. Schließlich betrifft die Erfindung ein Verfahren zum Prüfen der Dichtheit des mit dem Behälterdeckel verschlossenen Transport- und/oder Lagerbehälters.

Kontaminierte und/oder aktivierte Stoffe, wie insbesondere Reststoffe oder Abfallstoffe, die beispielsweise radioaktiv, chemisch und/oder biologisch kontaminiert und/oder aktiviert sind, müssen oftmals einer Endlagerung zugeführt werden, um weiteren Kontakt der Reststoffe mit der Umwelt zu vermeiden. Um die kontaminierten und/oder aktivierten Stoffe einer Endlagerung zuzuführen, sind Zwischen- und/oder Endlagerbehälter bekannt, in welche die Reststoffe für einen Transport und/oder eine Lagerung eingefüllt werden. Nach der Befüllung werden die Zwischen- und/oder Endlagerbehälter mit einem Behälterdeckel verschlossen, so beispielsweise durch einreihiges oder zweireihiges Verschrauben des Behälterdeckels mit einem Behälterkörper des Zwischen- und/oder Endlagerbehälters.

Um nun sicherzustellen, dass die Reststoffe nicht aus dem Zwischen- und/oder Endlagerbehälter austreten können, sind zwischen dem Behälterdeckel und dem Behälterkörper Dichtungen vorgesehen, die oftmals in entsprechenden Nuten an dem Behälterdeckel eingebracht sind. Gemäß internationalen Richtlinien dürfen bei mit kontaminierten und/oder aktivierten Stoffen gefüllten Zwischen- und/oder Endlagerbehältern bestimmte Leckageraten nicht überschritten werden, um sicherzustellen, dass die kontaminierten und/oder aktivierten Stoffe mit fortschreitender Zeit nicht aus dem Zwischen- und/oder Endlagerbehälter entweichen und eine Gefahr für Umwelt und Menschen darstellen. Entsprechend werden bei Zwischen- und/oder Endlagerbehältern gemäß IP-2 bzw. Typ-B-Anforderungen nach derzeitigen Richtlinien vorgenannte Dichtungen eingebracht, so beispielsweise bei einem runden Behälterdeckel zwei Elastomer O-Ring Dichtungen.

Aus der JP2006123905 ist ein Behälterdeckel zum Verschließen mindestens einer Einfüll- oder Deckelöffnung eines Transport- und/oder Lagerbehälters, insbesondere eines Zwischen- und/oder Endlagerbehälters für kontaminierte und/oder aktivierte Stoff bekannt.

Aus der GB 2 025 567 A ist eine aus einem Tragdeckel und einem Dichtdeckel bestehende Verschlussvorrichtung für eine grosse Durchführung in einem vorgespannten Spannbetondruckbehälter bekannt, die mit einem Liner ausgekleidet ist, wobei die beiden Deckel durch Spannglieder auf dem Spannbetondruckbehälter gehalten werden und der mit einem Flansch versehene Dichtdeckel sich unter Belastung durch Behälterinnendruck gegen den Tragdeckel abstützt.

Aus der US4274007 ist ein Abschirmtransport- und/oder Abschirmlagerbehälter für radioaktive Abfälle, insbesondere für bestrahlte Kernreaktorbrennelemente, mit Behältermantel, Behälterboden und Abschirmdeckel bekannt.

Um nun die Leckagerate zwischen diesen beiden Dichtungen zu bestimmen, also zu bestimmen, welches Volumen bzw. welche Masse während einer Zeitspanne aus dem Transport- und/oder Lagerbehälter unerwünscht austritt, wird das sogenannte Druckanstiegsverfahren verwendet. Dazu wird zunächst ein zwischen den beiden Dichtungen befindlicher definierter Prüfraum evakuiert, bevor mit der eigentlichen Druckanstiegsmessung begonnen wird. Die sogenannte Vorpumpzeit, die zum Evakuieren des definierten Prüfraums, also eines definierten Gasvolumens, benötigt wird, ist von entscheidender Bedeutung für die zu ermittelnde Leckagerate.

Versuche haben nun ergeben, dass bei aus dem Stand der Technik bekannten Ausgestaltungen erst nach Vorpumpzeiten von größer 60 Stunden die vorgegebenen Leckageraten unterschritten werden konnten. Zwar sind die Vorpumpzeiten durch die bekannten Normen nicht definiert, allerdings sind vorgenannte Vorpumpzeiten von größer 60 Stunden unwirtschaftlich, um den normativ geforderten Dichtheitsnachweis eines Zwischen- und/oder Endlagerbehälters durchzuführen und verzögern darüber hinaus die gesamte Fertigung und damit Auslieferung an den Kunden.

Entsprechend ist die Aufgabe der Erfindung, einen Behälterdeckel anzugeben, durch den mittels eines entsprechenden Verfahrens die Vorpumpzeit reduziert werden kann und trotzdem der normativ geforderte Dichtheitsnachweis zuverlässig erbringbar ist.

Die Lösung der Aufgabe erfolgt durch die Merkmale der unabhängigen Ansprüche. Vorteilhafte Ausgestaltungen der Erfindung sind in den Unteransprüchen angegeben.

Demnach wird die Aufgabe gelöst durch einen Behälterdeckel zum Verschließen einer Einfüllöffnung eines Transport- und/oder Lagerbehälters, insbesondere eines Zwischen- und/oder Endlagerbehälters für kontaminierte und/oder aktivierte Stoffe, mit wenigstens zwei an dem Behälterdeckel innenseitig und beabstandet zueinander angeordneten Nuten, wenigstens zwei jeweils in den Nuten angeordneten Dichtungen und mit einer Bypasseinrichtung zum Zirkulieren eines Gases, wobei die Bypasseinrichtung derart in Verbindung mit wenigstens einer Nut steht, dass ein durch die Dichtung und die Nut eingeschlossenes undefiniertes Gasvolumen durch die Bypasseinrichtung entweichen kann.

Ein wesentlicher Punkt der Erfindung ist somit, dass durch die Bypasseinrichtung ein durch die Dichtung und die Nut eingeschlossenes undefiniertes Gasvolumen entweichen kann, so insbesondere zum Bestimmen der Leckagerate eines mit dem Behälterdeckel verschlossenen Zwischen- und/oder Endlagerbehälters. Versuche haben ergeben, dass zwischen einer Dichtung mit einem kreisförmigen Querschnitt und einer Nut mit rechteckartigen Querschnitt ein undefiniertes Gasvolumen existiert, welches neben einem den Prüfraum bestimmenden definierten Gasvolumen während der Vorpumpzeit zu evakuieren ist, um daran anschließend die Leckagerate sicher und verlässlich bestimmen zu können.

Sofern bei aus dem Stand der Technik bekannten Ausgestaltungen die Vorpumpzeit zu gering gewählt wurde, konnte dadurch zwar das definierte Gasvolumen des Prüfraums evakuiert werden, nicht jedoch das zwischen der Dichtung und der Nut verbleibende undefinierte Gasvolumen. Denn aufgrund undefinierter Klemmkräfte der Dichtung bei mit dem Zwischen- und/oder Endlagerbehälter verschlossenem Behälterdeckel kann das durch die Dichtung und die Nut eingeschlossene undefinierte Gasvolumen nur intermittierend und nicht kontinuierlich abgepumpt werden. Zeitweise liegt die Dichtung berührend an der Nut an und verhindert so das Abpumpen des derartig gebildeten undefinierten Gasvolumens. Mit der Zeit, also nach Ablauf der Vorpumpzeit, hat sich dann jedoch bei aus dem Stand der Technik bekannten Ausgestaltungen eine Zirkulation zwischen dem undefinierten Gasvolumen und dem definierten Gasvolumen des Prüfraums ergeben. Der dadurch bedingte Druckanstieg im definierten Gasvolumen des Prüfraums hat dann dazu geführt, dass bei der Ermittlung der Leckagerate das gesamte Dichtungssystem bei den aus dem Stand der Technik bekannten Ausgestaltungen fälschlich als undicht bewertet worden ist.

Um nun vorgenanntem Druckanstieg vorzubeugen, geht die Erfindung einen komplett neuen Weg und stellt eine Bypasseinrichtung vor, mittels derer das durch die Dichtung und die Nut eingeschlossene undefinierte Gasvolumen frei zirkulieren kann, so insbesondere hin zum definierten Gasvolumen. Das bedeutet, dass beim Evakuieren des Prüfraums ebenso mittels der Bypasseinrichtung das undefinierte Gasvolumen evakuiert werden kann, so dass in der Folge vorgenannter Druckanstieg nicht mehr auftreten und insofern auch keine Fehleinschätzung beim Ermitteln der Leckagerate erfolgen kann.

Dazu ist Bypasseinrichtung zum Zirkulieren des Gases vorzugsweise als Rohr oder Bohrung in dem Behälterdeckel ausgestaltet. Weiter bevorzugt entspricht der Durchmesser der Dichtung dem Durchmesser der Nut, so dass die in die Nut eingelegte Dichtung berührend an der Nut anliegt. Weiter bevorzugt ist der Durchmesser der Dichtung größer, so beispielsweise 1 %, 2 %, 5 % und/oder 10 % größer als der entsprechende Durchmesser der Nut, so dass die in die Nut eingeführte Dichtung aufgrund einer Klemmkraft in der Nut gehalten wird. Besonders bevorzugt weist der Behälterdeckel genau zwei Dichtungen auf, wobei jede Dichtung jeweils in einer Nut angeordnet ist und die Bypasseinrichtung in Verbindung mit beiden Nuten steht.

Nach einer bevorzugten Ausführungsform ist zwischen den Nuten ein Steg angeordnet, dessen Oberfläche wenigstens teilweise gegenüber der Oberfläche der Innenseite des Behälterdeckels in Richtung der Nuten versetzt angeordnet ist, und wobei die Bypasseinrichtung derart in Verbindung mit der versetzten Oberfläche des Stegs steht, dass das undefinierte Gasvolumen hin zur versetzten Oberfläche des Stegs entweichen kann. Durch den gegenüber der Oberfläche der Innenseite zurückversetzten Steg wird, bei mit dem Behälterkörper verschlossenem Behälterdeckel, der Prüfraum und damit das definierte Gasvolumen gebildet. Nach dieser Ausgestaltung verbindet nunmehr die Bypasseinrichtung das undefinierte Gasvolumen, begrenzt durch die Dichtung und die Nut, mit dem definierten Gasvolumen, begrenzt durch den zurückversetzten Steg, den Behälterkörper sowie den Dichtungen.

Dabei ist bevorzugt, dass sich der Steg zwischen den Nuten derart erstreckt, dass, mittels des zurückversetzten Steges und bei zwei Nuten, Gas zwischen der ersten Nut und der zweiten Nut frei zirkulieren kann. Bevorzugt ist der Steg gegenüber der Oberfläche der Innenseite des Behälterdeckels um 0,3 mm, weiter bevorzugt um 0,5 bis 0,6 mm zurückversetzt angeordnet und weist ferner und/oder alternativ eine plane Oberfläche auf, welche parallel zur Oberfläche der Innenseite des Behälterdeckels ist. Zudem erstreckt sich der Steg bevorzugt entlang der Erstreckung der Nuten, so beispielsweise bei einem kreisrunden Behälterdeckel mit umlaufenden Nuten ebenso umlaufend. Mit "hin zur Oberfläche des Steges entweichen" ist im Rahmen der Erfindung vorzugsweise gemeint, dass das durch die Bypasseinrichtung zirkulierende Gas hin zu dem definierten Gasvolumen entweichen kann, welches wenigstens teilweise durch die Oberfläche des Steges begrenzt ist. Sofern nun das derart definierte Gasvolumen evakuiert wird, um in der Folge die Leckagerate des Zwischen- und/oder Endlagerbehälters zu ermitteln, erfolgt durch das Evakuieren des derart geschaffenen definierten Gasvolumens ebenso das Evakuieren des undefinierten Gasvolumens.

Grundsätzlich kann die Nut beliebig ausgestaltet sein. Nach einer besonders bevorzugten Ausführungsform ist die Nut jedoch rechteckartig ausgestaltet und die Bypasseinrichtung ist im Bereich der der Oberfläche der Innenseite des Behälterdeckels abgewandten Ausbuchtung und/oder abgewandten Ecke der Nut angeordnet. Das bedeutet, dass der Querschnitt der Nut vorzugsweise eine rechteckartige und/oder abgerundete Form aufweist, wobei wenigstens eine Ecke von der Innenseite des Behälterdeckels abgewandt angeordnet ist. Nach der Ausgestaltung ist somit vorgesehen, dass im Bereich dieser Ecke die Bypasseinrichtung angeordnet ist, also mit anderen Worten die Bypasseinrichtung vorzugsweise möglichst weit entfernt von der Oberfläche der Innenseite des Behälterdeckels in der Nut angeordnet ist und ein Zirkulieren des benachbart zur Ecke befindlichen Gases ermöglicht. Die Bypasseinrichtung ist also nach dieser Ausgestaltung "möglichst tief" in der Nut vorgesehen. Dadurch wird ermöglicht, dass das undefinierte Gasvolumen möglichst vollständig bzw. vollständig durch die Bypasseinrichtung entweichen kann. Dabei kann eine Ecke nicht nur spitz, sondern auch abgerundet ausgestaltet sein.

Zur Ausgestaltung der Bypasseinrichtung existieren ebenso verschiedene Möglichkeiten. Nach besonders bevorzugten Ausführungsformen ist die Bypasseinrichtung jedoch als Bypassnut und/oder als Bohrung zwischen dem undefinierten Gasvolumen und der Oberfläche der Innenseite des Behälterdeckels ausgestaltet, als Verbindungsnut zwischen den beiden Nuten ausgestaltet und/oder als sich von der Oberfläche der Innenseite des Behälterdeckels in die Nut hinein erstreckende Ausbuchtung der Nut und/oder als Einlegeteil in die Nut ausgestaltet. In jedem Fall erlauben die Ausgestaltungen der Bypasseinrichtung die freie Zirkulation des durch die Dichtung und Nut eingeschlossenen undefinierten Gasvolumens, so entweder hin zur Oberfläche der Innenseite des Behälterdeckels oder aber zwischen den beiden Nuten. Auch wenn für den Fachmann unmissverständlich klar ist, sei an dieser Stelle erwähnt, dass der Behälterdeckel vorzugsweise vorgenannte Innenseite und eine der Innenseite abgewandte Außenseite aufweist, so dass im verschlossenen Zustand des Behälterdeckels die Innenseite des Behälterdeckels zum Behälterinneren zeigt, so hin zur Einfüllöffnung, während die Außenseite des Behälterdeckels von dem Behälterinneren des Behälters weg gerichtet ist.

Nach einer weiteren bevorzugten Ausführungsform sind die Nuten umlaufend, parallel zueinander und in einem Randbereich der Innenseite des Behälterdeckels angeordnet. Das bedeutet, dass die Nuten beispielsweise benachbart zum Rand des Behälterdeckels befinden, so beispielsweise 3 bzw. 5 cm vom eigentlichen Rand des Behälterdeckels entfernt vorgesehen sind. Dabei können die Nuten grundsätzlich durch einen drehenden oder fräsenden Bearbeitungsschritt in dem Behälterdeckel eingebracht werden, oder aber, sofern der Behälterdeckel durch ein Gussverfahren hergestellt ist, bereits durch die Gussform mit eingeformt werden.

Nach einer weiteren bevorzugten Ausgestaltung ist die Nut als Schwalbenschwanznut und/oder die Dichtung als Elastomer O-Ring Dichtung ausgestaltet. Dies hat den Vorteil, dass die O-Ring Dichtungen bei einer Montage und/oder Demontage nicht aus den Schwalbenschwanznuten herausfallen können, sofern denn der Durchmesser der Dichtungen etwas größer gewählt ist als der Nutdurchmesser an der kleinsten Stelle, so dass bei der Verfüllung eines Zwischen- und/oder Endlagerbehälters mit radioaktiv kontaminierten und/oder aktivierten Stoffen Monteure bei der Montage bzw. Demontage des Deckels möglichst wenig radioaktiver Strahlung ausgesetzt sind.

Nach einer besonders bevorzugten Ausgestaltung ist ein Teil des Steges zwischen den Nuten entfernt und ein Formteil zum Einsetzen in den entfernten Teil vorgesehen, wobei die Bypasseinrichtung an dem Formteil angeordnet ist. Sofern die Nuten als umlaufende Schwalbenschwanznuten in dem Behälterdeckel eingefräst werden, ist es notwendig, dass das Fräswerkzeug an wenigstens einer Stelle in den Behälterdeckel eingefahren wird. Dazu wird vorgenannter Teil des Steges entfernt, das Fräswerkzeug zum Fräsen der Schwalbenschwanznut eingefahren, und nach dem Bearbeiten das Formteil in den entfernten Teil eingesetzt, so beispielsweise verschraubt. Vorzugsweise weist dazu das Formteil einen Querschnitt auf, durch den der vormals entfernte Teil des Steges zur Ausbildung der Schwalbenschwanznut an dieser Stelle substituiert wird.

Das Formteil, auch "locking piece" genannt, ermöglicht dadurch, dass sich die O-Ring Dichtungen auch im Bereich dieses Teils bzw. bei umlaufenden Nuten entlang des gesamten Behälterumfangs an vordefinierten Positionen befinden. Weiterer Vorteil dieser Ausgestaltung ist, dass zum Einfügen der Bypasseinrichtung nur das Locking Piece verändert, nicht jedoch der Behälterdeckel mechanisch bearbeitet werden muss. Grundsätzlich lassen sich umlaufende Schwalbenschwanznuten nur mit einem einzigen Locking Piece in dem Behälterdeckel einarbeiten, jedoch können auch eine Mehrzahl von Locking Pieces, so beispielsweise an jeder Behälterdeckelseite, vorgesehen sein.

Grundsätzlich kann die Bypasseinrichtung beliebig an dem Formteil angeordnet sein, wobei nach einer besonders bevorzugten Ausführungsform jedoch bevorzugt ist, dass die Bypasseinrichtung an einer Stirnfläche des Formteils angeordnet und als zwei sich von der Oberseite des Formteils von einem gemeinsamen Punkt jeweils hin zur Unterseite des Formteils und, bei in den entfernten Teil eingesetztem Formteil, in die beiden Nuten hinein erstreckende Bypassnuten ausgestaltet ist. Weiter bevorzugt sind an jeder Stirnfläche des Formteils jeweils eine Bypasseinrichtung vorgesehen, die gemäß der vorgenannten Ausgestaltung durch zwei Bypassnuten, die, abhängig von der Dimensionierung des Formteils, beispielsweise in einem Winkel von 90° gegeneinander verdreht an der Stirnfläche entlang verlaufen. Dabei ist weiter bevorzugt, dass die Bypassnuten in den der Oberfläche der Innenseite des Behälterdeckels entgegengesetzten Ecke der Schwalbenschwanznut enden, so dass selbst bei maximal verpresster O-Ring Dichtung das zwischen der Dichtung und der Schwalbenschwanznut befindliche Gas aus dieser Ecke entweichen kann. Weiter bevorzugt weist die Nut, so beispielsweise in der Ausgestaltung als Schwalbenschwanznut, zwei der Oberfläche der Innenseite des Behälterdeckels abgewandte Ecken auf, die jeweils beide mit der Bypasseinrichtung verbunden sind.

Die Aufgabe der Erfindung wird weiterhin gelöst durch einen Transport- und/oder Lagerbehälter, insbesondere Zwischen- und/oder Endlagerbehälter für kontaminierte und/oder aktivierte Stoffe, umfassend einen einen Behälterboden und wenigstens eine Behälterseitenwand aufweisenden Behälterkörper sowie einen Behälterdeckel wie vorab beschrieben, wobei der Behälterkörper die durch den Behälterdeckel verschließbare Einfüllöffnung aufweist.

Ein derartiger Transport- und/oder Lagerbehälter findet bevorzugt Verwendung, um chemisch, biologisch oder radioaktiv kontaminierte und/oder aktivierte Stoffe aufzunehmen, zu lagern, zu transportieren und/oder einer Endlagerung zuzuführen. Der Transport- und/oder Lagerbehälter umfasst einen Behälterkörper, der einen Behälterboden und wenigstens eine Behälterseitenwand aufweist. Beispielsweise kann die wenigstens eine Behälterseitenwand in einem im Wesentlichen rechten Winkel zu dem Behälterboden angeordnet und/oder mit dieser einstückig ausgebildet sein. Dabei kann nur eine einzige Behälterseitenwand vorgesehen sein, wenn diese zylinderförmig geformt ist und der Behälterboden einen kreisrunden Querschnitt aufweist. In dieser Ausgestaltung kann der Durchmesser des dann zylinderförmigen Transport- und/oder Lagerbehälters in einem Bereich von ≥ 1000 mm bis ≤ 1100 mm liegen.

Bevorzugt weist der Transport- und/oder Lagerbehälter bzw. der Behälterkörper jedoch eine Mehrzahl an Behälterseitenwänden auf, wobei der Behälterboden eine in Draufsicht mehreckige Form aufweisen kann. In dieser Ausgestaltung sind die Behälterseitenwände in einem entsprechenden Winkel zueinander angeordnet und können ferner miteinander und mit dem Behälterboden einstückig ausgebildet sein, und weisen besonders bevorzugt eine rechteckartige Form auf.

Um nun die kontaminierten und/oder aktivierten Stoffe in den Transport- und/oder Lagerbehälter einfüllen zu können, weist der Behälterkörper eine Einfüllöffnung auf. Diese ist in ihrer Größe und Form grundsätzlich frei wählbar, kann jedoch an die Grundform des Behälterbodens, also insbesondere an die Form in Draufsicht auf den Behälterboden, angepasst sein. Um ein Austreten von kontaminierten und/oder aktivierten Stoffen selbst bzw. ein Austreten von von den kontaminierten und/oder aktivierten Stoffen ausgehenden Emissionen zu verhindern, ist die Einfüllöffnung durch den Behälterdeckel insbesondere hermetisch verschließbar. Bei verschlossener Einfüllöffnung ist der Transport- und/oder Lagerbehälter somit insbesondere hermetisch dicht, so dass an keiner Stelle des Behälters kontaminierte und/oder aktivierte Stoffe selbst bzw. von den kontaminierten und/oder aktivierten Stoffen ausgehenden Emission, wie beispielsweise radioaktive Strahlung, aus dem Transport- und/oder Lagerbehälter austreten können.

Bevorzugt ist der Behälterkörper und/oder der Behälterdeckel aus Gusseisen, vorzugsweise aus Gusseisen mit Kugelgraphit, so genanntem Sphäroguss, ausgebildet. Insbesondere bei einer Ausbildung aus Gusseisen und damit einem ermöglichten Verfahren des Gusses lässt sich der Transport- und/oder Lagerbehälter besonders einfach und definiert herstellen. Unter Gusseisen kann dabei im Sinne der vorliegenden Erfindung insbesondere eine Eisenlegierung mit einem hohen Anteil von Kohlenstoff, wie beispielsweise ≥ 2 %, und Silizium, wie beispielsweise ≥ 1,5 %, verstanden werden. Weitere Bestandteile, wie beispielsweise Mangan, Chrom oder Nickel können dabei in dem Gusseisen enthalten sein. Ferner kann der Transport- und/oder Lagerbehälter bzw. der Behälterkörper und/oder der Behälterdeckel durch ein Gussverfahren insbesondere aus sogenanntem schwarzem Gusseisen hergestellt bzw. geformt sein. In dieser Form kann das Gusseisen ferner Kohlenstoff in Form von Graphit, wie insbesondere bei Kugelgraphit, umfassen.

Weiter bevorzugt weist der Transport- und/oder Lagerbehälter an seiner Oberseite und/oder an seiner Unterseite, jedoch insbesondere an seiner der Einfüllöffnung zugewandten Seite, eine Transportöffnung zum Transportieren des Transport- und/oder Lagerbehälters auf. Die Transportöffnung kann als Iso-Öffnung ausgestaltet sein, um mit standardisierten Verfahren den Transport- und/oder Lagerbehälter zu transportieren. Vorteilhafterweise umfasst der Transport- und/oder Lagerbehälter eine Mehrzahl von Transportöffnungen, die für den Fall einer eckigen Grundform beispielsweise an den Ecken angeordnet sein können. Bei einer quaderförmigen Ausgestaltung, so beispielsweise mit einem quadratischen oder rechteckigen Querschnitt, kann eine Vielzahl von Transport- und/oder Lagerbehältern mit geringem Platzbedarf zusammengefasst und gelagert werden. In dieser Ausgestaltung können die Abmessungen der Transport- und/oder Lagerbehälter etwa im Bereich üblicher genormter Iso-Container liegen. Beispielsweise können die Höhe und Breite in einen Bereich von ≥ 1200 mm bis ≤ 2000 mm liegen, wobei die Länge in einen Bereich von ≥ 1600 mm bis ≤ 3000 mm liegen kann.

Die Fixierung des Behälterdeckels mit dem Behälterkörper kann verschiedenartig erfolgen, wobei eine Verschraubung bevorzugt ist. Dazu sind die Nuten bzw. die Dichtungen vorzugsweise derart an dem Behälterdeckel angeordnet, dass beim Verschließen der Einfüllöffnung durch den Behälterdeckel die Dichtungen zwischen dem Behälterdeckel und dem Behälterkörper zu liegen kommen, so dass ein hermetischer Verschluss des Transport- und/oder Lagerbehälters entsteht. Dabei kann der Behälterdeckel mit dem Behälterkörper einreihig oder zweireihig verschraubbar sein. Gerade eine zweireihige Verschraubung bietet ein besonders sicheres, festes und stabiles Verschrauben von Behälterdeckel und Lagerkörper. Bezüglich der Verschraubung können in dem Behälterkörper Gewinde vorgesehen sein, oder auch Gewindebolzen aus der Oberfläche des Behälterkörpers hervorstehen.

Weiterhin ist bevorzugt, dass ein einziger Behälterdeckel vorgesehen ist, wobei jedoch ebenso zwei Behälterdeckel vorgesehen sind, wobei der zweite Behälterdeckel den ersten Behälterdeckel in seiner Ausdehnung überlappt. Demnach würden auch zwei Gewindereihen bevorzugt sein, wobei der erste Deckel, auch Primärdeckel genannt, und vorzugsweise wie vorab ausgestaltet, mittels der ersten Gewindereihe und der zweite Deckel mittels der zweiten Gewindereihe befestigbar wäre. Ebenso wie der Primärdeckel kann auch der zweite Deckel, der sogenannte Sekundärdeckel, eine Dichtung aufweisen, die ebenso als Elastomer O-Ring Dichtung, aus Moosgummi und/oder aus Metall ausgestaltet sein kann. Dabei ist ferner bevorzugt, dass die Dichtung des Primärdeckels, ein Elastomer aufweist, das zum Abdichten des Behälterinnenraums gegen thermische Einflüsse und/oder Radioaktivität ausgestaltet ist und die äußere Dichtung des Sekundärdeckels ein Elastomer aufweist, das zum Abdichten des Behälterinnenraums gegen Feuchtigkeit ausgestaltet ist. Eine derartige Ausgestaltung ist vorteilhaft, da für die äußere Dichtung im Vergleich zu der inneren Dichtung ein kostengünstigeres Material verwendbar ist, so dass eine zweite teure Dichtung für die äußere sogenannte Opferdichtung eingespart werden kann.

Ebenso kann der Behälterdeckel derart ausgestaltet sein, dass der Behälterdeckel im geschlossenen Zustand wenigstens an den Längsseiten des Behälters anliegt, also eine im Wesentlichen gleich große Erstreckung wie der Behälter, also der Transport- und/oder Lagerbehälter bzw. Zwischen und/oder Endlagerbehälter, an seiner Oberseite aufweist, wobei bevorzugt der Behälterdeckel an seinen Ecken Aussparungen aufweist, die zu den Transportöffnungen korrespondieren. Ebenso kann der Behälter an seiner Oberseite eine größere Erstreckung als der Behälterdeckel aufweisen, so dass der Behälter derart einen umlaufenden Kragen ausbildet, in den der Behälterdeckel zum Verschließen des Behälters einlegbar ist. Schließlich kann an dem Behälterdeckel auch ein Prüfanschluss vorgesehen sein, um einerseits den Zustand des gelagerten Gutes zu prüfen und/oder weitere Parameter zu überwachen. Bevorzugt ist der Behälterdeckel aus Gusseisen oder Stahl ausgebildet.

Nach einer weiteren Ausgestaltung ist vorgesehen, dass der Behälterdeckel und der Behälterkörper derart eingerichtet sind, dass der auf dem Behälterkörper bzw. auf der Einfüllöffnung befestigte Behälterdeckel den Behälterkörper in Richtung weg vom Behälterinnenraum um vorzugsweise wenigstens 10 mm überragt. Dadurch wird eine Positivkontur geschaffen, die eine bessere Stapelung des Behälters ermöglicht. Ferner ist bevorzugt, dass die Einfüllöffnung und/oder der Behälterdeckel in Bezug auf die Erstreckung des Behälters an seiner Behälteroberseite möglichst groß ausgestaltet sind, so dass eine besonders einfache Beladung des Behälters ermöglicht wird.

Nach einer weiteren bevorzugten Ausführungsform ist vorgesehen, dass, gemäß der vorgenannten bevorzugten Ausgestaltung mit dem zurückversetzten Steg, der Behälterdeckel die Einfüllöffnung derart verschließt, dass zwischen dem Steg und dem Behälterkörper ein definiertes Gasvolumen eingeschlossen ist, welches mittels der Bypasseinrichtung in Verbindung mit dem undefinierten Gasvolumen steht. Dadurch kann bei einer Dichtheitsprüfung ein zwischen der Dichtung und der Nut eingeschlossenes Gas, so Luft, frei mit dem durch das definierte Gasvolumen gebildete definierte Prüfvolumen zirkulieren, und entsprechend evakuiert werden.

Die Aufgabe der Erfindung wird weiterhin gelöst durch ein Verfahren zum Prüfen der Dichtheit eines mit dem Behälterdeckel verschlossenen Transport- und/oder Lagerbehälters wie vorab beschrieben, mit dem Schritt: a) Evakuieren des Gasvolumens. Damit wird beim Evakuieren des Gasvolumens aufgrund der Bypasseinrichtung nicht nur das definierte Gasvolumen des durch den zurückversetzten Steg gebildeten Prüfraums evakuiert, sondern auch mögliche in dem undefinierten Gasvolumen verbleibende Luft bzw. Gas evakuiert. Dadurch lässt sich die sogenannte Vorpumpzeit zum Evakuieren wesentlich gegenüber den aus dem Stand der Technik bekannten Ausgestaltungen verringern, um mittels eines gemäß einer weiteren bevorzugten Ausführungsform mit dem Schritt b) Ermitteln der Leckagerate des Transport- und/oder Lagerbehälters vorgenannte Leckagerate zu ermitteln. Im Ergebnis stellt damit das Verfahren in Verbindung mit dem erfindungsgemäßen Transport- und/oder Lagerbehälter eine signifikante Weiterentwicklung gegenüber dem Stand der Technik dar, die bei verringerten Vorpumpzeiten eine weitaus genauere und verlässlichere Prüfung der Dichtheit eines derartigen Transport- und/oder Lagerbehälters ermöglicht.

Nachfolgend wird die Erfindung unter Bezugnahme auf die anliegende Zeichnung anhand bevorzugter Ausführungsformen näher erläutert.

### Es zeigen

- Fig. 1: einen Transport- und/oder Lagerbehälter mit verschlossenem Behälterdeckel gemäß einer bevorzugten Ausgestaltung in einer Schnittansicht,

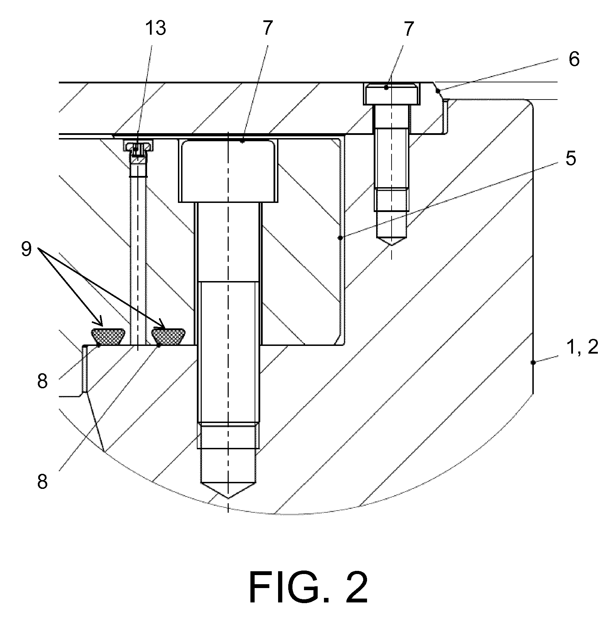

- Fig. 2: einen Ausschnitt der Fig. 1 im Bereich des Behälterdeckels als Schnittansicht,
- Fig. 3: eine weitere schematische Ansicht des Behälterdeckels gemäß der bevorzugten Ausgestaltung,
- Fig. 4: eine schematische Ansicht der auf eine Dichtung wirkenden Kräfte gemäß der Ausgestaltung nach Fig. 3,
- Fig. 5-7: weitere Ausgestaltungen eines Ausschnitts des Behälterdeckels in Draufsicht,
- Fig. 8: den Behälterdeckel in einer Draufsicht gemäß der bevorzugten Ausgestaltung, und
- Fig. 9: ein Formteil zum Einsetzen in den in Fig. 8 gezeigten Behälterdeckel.

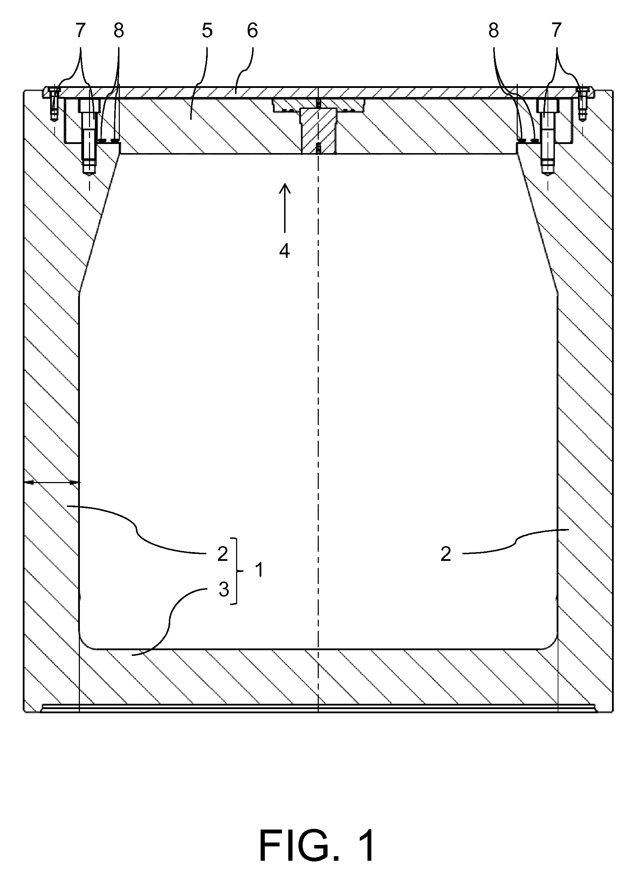

Fig. 1 zeigt einen Transport- und/oder Lagerbehälter gemäß einer bevorzugten Ausführungsform der Erfindung in einer Schnittansicht. Der Transport- und/oder Lagerbehälter, im Rahmen der Erfindung ebenso Zwischen- und/oder Endlagerbehälter Transport- und Lagerbehälter oder schlichtweg Behälter genannt, dient der Aufnahme und Lagerung kontaminierter und/oder aktivierter Stoffe, so beispielsweise radioaktiv, chemisch und/oder biologisch kontaminierter und/oder aktivierter Stoffe, und ist aus Gusseisen hergestellt.

Vorliegend weist der Transport- und/oder Lagerbehälter einen rechteckartigen Querschnitt auf, wobei der Behälterkörper 1 vier Behälterseitenwände 2, davon zwei Behälterwände 2 in der Schnittansicht in Fig. 1 gezeigt, sowie einen Behälterboden 3 aufweist und einstückig ausgebildet ist. Eine Einfüllöffnung 4 des Behälterkörpers 1 ist mit einem Behälterdeckel 5 verschlossen. Der Behälterdeckel 5, auch Primärdeckel genannt, ist wiederum mit einem Sekundärdeckel 6 verschlossen. Sowohl der Behälterdeckel 5 als auch der Sekundärdeckel 6 sind dazu mittels Schrauben 7 mit dem Behälterkörper 1 verschraubt.

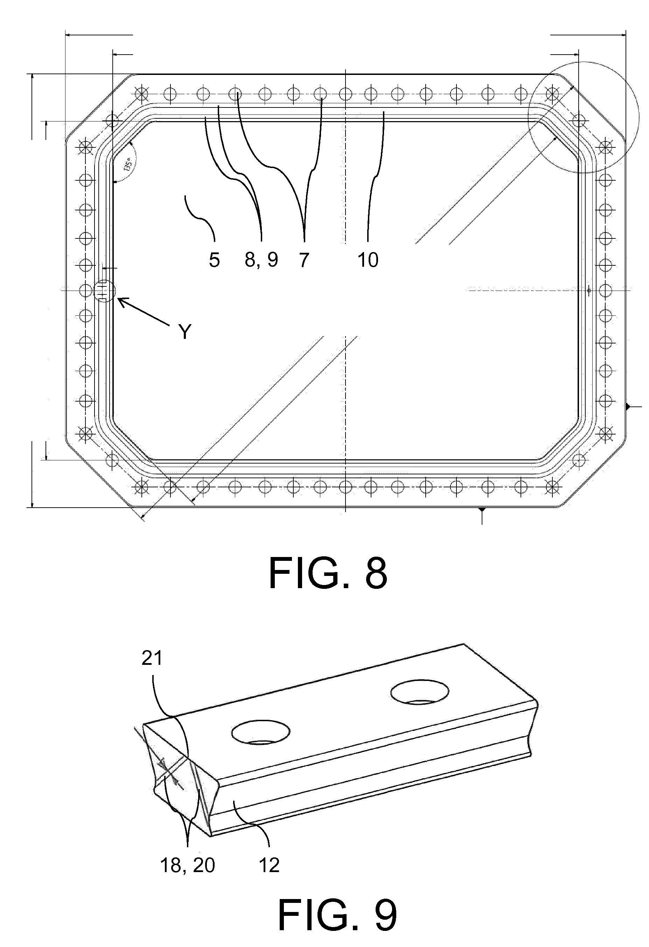

Um nun den Behälterdeckel 5 hermetisch gegenüber dem Behälterkörper 1 abzudichten, sind Dichtungen 8 vorgesehen, die an dem Behälterdeckel 5 innenseitig, also zum Behälterinneren zugewandt, und beabstandet zueinander in zwei Nuten 9 angeordnet sind. Die Nuten 9 sind vorliegend als Schwalbenschwanznuten ausgestaltet und, wie aus der Draufsicht der Innenseite des in Fig. 8 abgebildeten Behälterdeckels 5 ersichtlich, parallel zueinander und umlaufend an einem Randbereich 10 des Behälterdeckels 5 angeordnet.

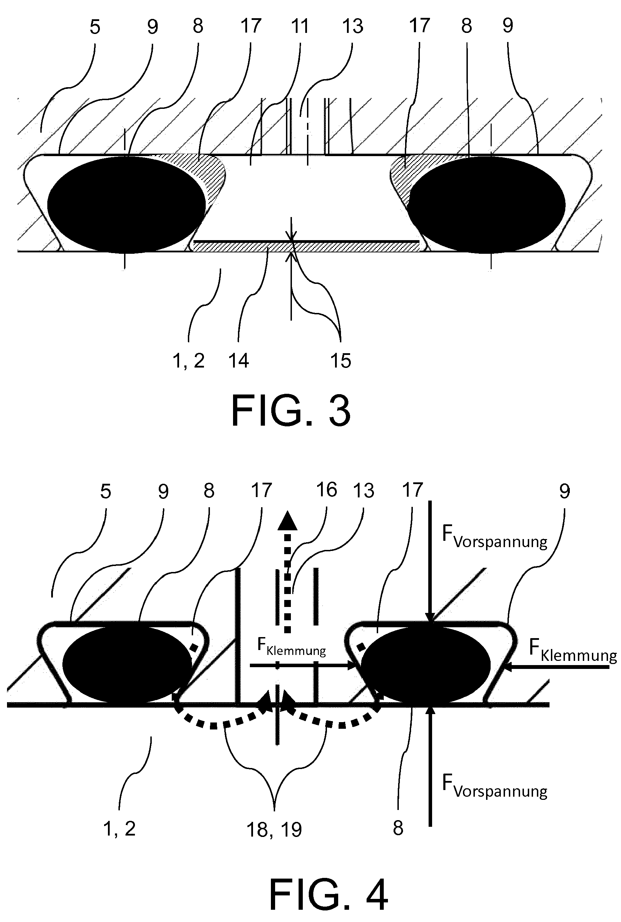

Wie aus der in Fig. 3 gezeigten weiteren schematischen Schnittansicht der in die Schwalbenschwanznuten 9 eingebrachten Dichtungen 8 zu erkennen ist, existiert zwischen den beiden Nuten 9 ein Steg 11. Um nun die Schwalbenschwanznuten 9 in den Behälterdeckel 5 einfräsen zu können, ist es notwendig an einer Stelle, gekennzeichnet in Fig. 8 mit dem Bezugszeichen Y, den Steg 11 zu entfernen, um einen Fräskopf in den Behälterdeckel 5 einfahren zu können. Damit nun nach dem Fräsen der Schwalbenschwanznuten 9 auch an der in Fig. 8 mit Y bezeichneten Stelle die Dichtungen 8 an vordefinierten Positionen verbleiben, wird ein Formteil 12, gezeigt in Fig. 9, auch Locking Piece genannt, in die in Fig. 8 mit Y bezeichnete Stelle eingebracht, um den entfernten Teil des Steges 11 zu substituieren.

Gemäß entsprechenden internationalen Richtlinien ist gefordert, dass Transport- und/oder Lagerbehälter für kontaminierte und/oder aktivierte Stoffe bestimmte Leckageraten nicht überschreiten. Die Bestimmung der Leckagerate zwischen den beiden Dichtungen 8, die vorliegend, wie aus Fig. 3 ersichtlich, als Elastomer O-Ring Dichtungen ausgestaltet sind, wird mittels des Druckanstiegsverfahrens ermittelt.

Dafür wird durch einen Evakuierkanal 13 zwischen den beiden Dichtungen 8 befindliches Gas aus einem sogenannten Prüfraum 14, vorliegend auch definiertes Gasvolumen 14 genannt, evakuiert. Dazu ist die Oberfläche des Steges 11 gegenüber der Oberfläche der Innenseite des Behälterdeckels 5 zurückversetzt, symbolisiert in Fig. 3 durch die Pfeile 15, so dass zwischen der Oberfläche des Stegs 11 und dem Behälterkörper 1 der Prüfraum 14 mit dem definierten Gasvolumen 14 entsteht. Vorliegend ist der Steg 11 gemäß dem mit den Pfeilen 15 bezeichneten Abstand 0,5 bis 0,6 mm gegenüber der Oberfläche der Innenseite des Behälterdeckels 5 abgesetzt. Während der sogenannten Vorpumpzeit erfolgt während des Evakuierens, dargestellt durch den weiteren Pfeil 16, das Evakuieren des definierten Gasvolumens 14, welches durch die beiden O-Ring Dichtungen 8, den Steg 11 sowie den Behälterkörper 1 begrenzt wird.

Sofern nun, wie in Fig. 4 gezeigt, der Behälterdeckel 5 mit dem Behälterkörper 1 mittels der Schrauben 7 verbunden ist, wirken verschiedene in Fig. 4 dargestellten Kräfte auf die O-Ring Dichtungen 8, nämlich einerseits Vorspannkräfte sowie andererseits Klemmkräfte. Dabei sind die Vorspannkräfte, bezeichnet mit F_{Vorspannung}, aufgrund der konstruktiven Gestaltung der Schwalbenschwanznuten 8 vorgegeben und von entscheidender Bedeutung für die Dichtigkeit des Transport- und/oder Lagerbehälters.

Die Klemmkräfte, bezeichnet in Fig. 4 mit F_{Klemmung,} sind hingegen nicht genau definiert und führen beim Evakuieren des Prüfraums 14 dazu, dass ein durch die Dichtungen 8 und die Nuten 9 eingeschlossenes undefiniertes Gasvolumen 17, gezeigt in Fig. 3, nur intermittierend und nicht kontinuierlich evakuiert werden kann. Denn zeitweise liegen die beiden O-Ring Dichtungen 8 berührend an den Schwalbenschwanznuten 9 an und verhindern somit das Abpumpen des im undefinierten Gasvolumen 17 befindlichen Gases, so beispielsweise von Luft.

Bei aus dem Stand der Technik bekannten Ausgestaltungen führte dies während der Druckanstiegsprüfung zu einem langsamen, aber messbaren Druckausgleich zwischen dem definierten Gasvolumen 14 und dem undefinierten Gasvolumen 17. Dieser Druckanstieg führte im Ergebnis dazu, dass der Transport- und/oder Lagerbehälter als undicht bewertet wurde, selbst wenn lange Vorpumpzeiten von größer 60 Stunden gewählt wurden.

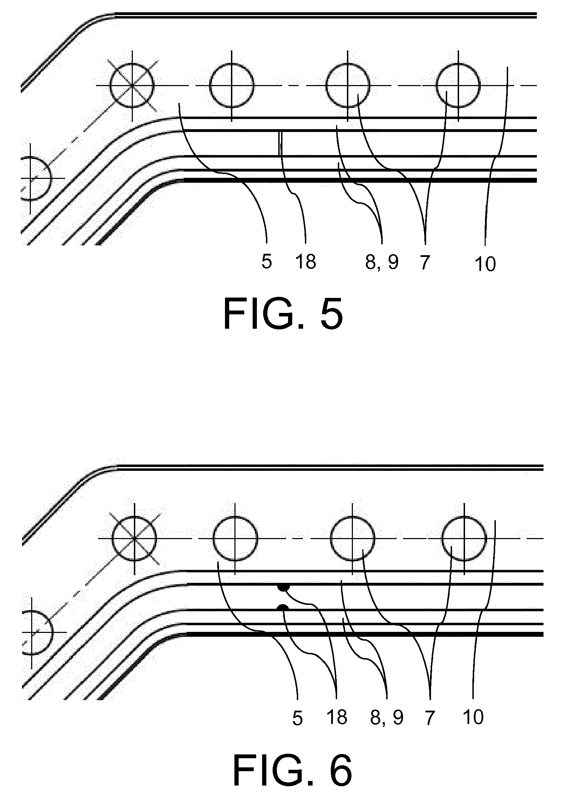

Gemäß der Erfindung ist nunmehr eine Bypasseinrichtung 18 vorgesehen, gezeigt in Fig. 5 bis 7, mittels derer eine Zirkulation eines Gases zwischen dem undefinierten Gasvolumen 17 und dem definierten Gasvolumen 14, dargestellt in Fig. 4 durch Pfeil 19, stattfinden kann. Das bedeutet, dass beim Evakuieren 16 des definierten Gasvolumens 14 ebenso das undefinierte Gasvolumen 17 mittels der Bypasseinrichtung 18 mit evakuiert wird.

Im Ergebnis wird dadurch vorgenannter Druckanstieg im definierten Gasvolumen 14 vermieden, also die Qualität der Messungen zur Leckagerate signifikant verbessert. Mit anderen Worten wird also ein Bypass mittels der Bypasseinrichtung 18 geschaffen, damit während der Vorpumpphase zum anschließenden Ermitteln der Leckagerate Gas aus dem undefinierten Gasvolumen 17, welches durch die Dichtung 8 und die Nut 9 begrenzt bzw. eingeschlossen ist, ebenso auch mit durch den Evakuierkanal 13 abgepumpt werden kann.

Zur Ausgestaltung der Bypasseinrichtung 18 existieren nun verschiedene Möglichkeiten. Im Falle eines in Fig. 9 gezeigten Formteils 12 lässt sich die Bypasseinrichtung 18 in Form von an den Stirnflächen des Formteils 12 vorgesehenen Bypassnuten 20 realisieren. Die Bypassnuten 20 erstrecken sich dazu von einem gemeinsamen Punkt 21 von der Oberfläche des Formteils 12 jeweils hin zur Unterseite des Formteils 12 in die beiden Nuten 9 derart hinein, dass die Bypassnuten 12 in einer abgerundeten Ecke einer rechteckartig ausgestalteten Schwalbenschwanznut 9 bzw. "sehr tief" in der Schwalbenschwanznut 9 enden.

Eine derartige Ausgestaltung ist vorteilig, da durch die Verpressung der Dichtungen 8 im verschraubten Zustand des Behälterdeckels 5 mit dem Behälterkörper 1 keine Linienpressung mehr an den Flanken der Schwalbenschwanznuten 8 vorliegt, sondern eine Flächenpressung. Zudem dehnt sich eine als Elastomer-Dichtung ausgeführte Dichtung 8 mit steigenden Temperaturen aus. Insofern ist besonders vorteilig, wenn die Bypasseinrichtung 18, so beispielsweise bei gegenüber dem O-Ring geringerem Querschnitt, entsprechend "tief" an den Seiten der Schwalbenschwanznut 9 angesetzt ist. Weiter vorteilig sind die Bypassnuten 20 an den beiden entgegengesetzt angeordneten Stirnflächen des Formteils 12 vorgesehen und weisen einen Durchmesser von 2,5 mm bei einer Tiefe von 1,5 mm auf.

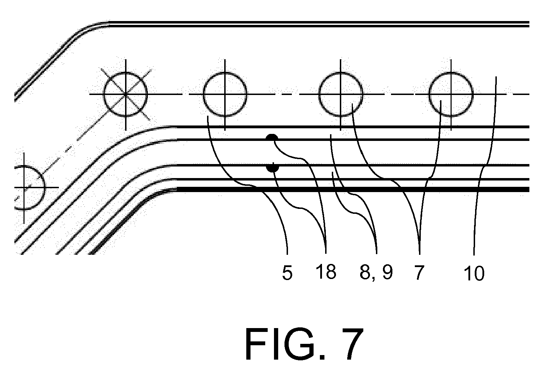

Ebenso kann die Bypasseinrichtung 18 nach der in Fig. 5 gezeigten Ausgestaltung durch eine Ausfräsung zwischen den beiden Schwalbenschwanznuten 9 ausgestaltet sein. Fig. 6 zeigt eine weitere Ausgestaltung als lokale Ausbuchtungen der Schwalbenschwanznuten 9. Ebenso liegt eine mögliche Ausgestaltung der Bypasseinrichtung 18 darin, anstelle von Bypassnuten 20 Bohrungen vom Steg 11 zwischen den beiden Schwalbenschwanznuten 9 in den unteren Bereich der Nuten 9 einzubringen. Schließlich zeigt Fig. 7 in die Nuten 9 eingelegte Einlegeteile als Bypasseinrichtung 18, die einen Bypass aus dem unteren Nutbereich 9 offen lassen. Dazu können Klammern verwendet werden, die im Gegensatz zu der in Fig. 6 gezeigten Variante eingebracht werden.

Im Ergebnis erlaubt die Erfindung damit eine weitaus exaktere und verlässlichere Bestimmung der Leckagerate bei gleichzeitiger Reduzierung der Vorpumpzeit.

**Bezugszeichenliste**

| | |
|---|---|
| Behälterkörper | 1 |
| Behälterseitenwand | 2 |
| Behälterboden | 3 |
| Einfüllöffnung | 4 |
| Behälterdeckel, Primärdeckel | 5 |
| Sekundärdeckel | 6 |
| Schrauben | 7 |
| Dichtung | 8 |
| Nut, Schwalbenschwanznut | 9 |
| Randbereich | 10 |
| Steg | 11 |
| Formteil | 12 |
| Evakuierkanal | 13 |
| Prüfraum, definiertes Gasvolumen | 14 |
| Pfeil (versetzte Anordnung) | 15 |
| Pfeil (Evakuieren) | 16 |
| Undefiniertes Gasvolumen | 17 |
| Bypasseinrichtung | 18 |
| Pfeil (Zirkulation) | 19 |
| Bypassnut | 20 |
| Punkt | 21 |
| Entfernter Teil | Y |

## Patentansprüche

1. Behälterdeckel (5) zum Verschließen mindestens einer Einfüll- oder Deckelöffnung (4) eines Transport- und/oder Lagerbehälters, insbesondere eines Zwischen- und/oder Endlagerbehälters für kontaminierte und/oder aktivierte Stoffe, mit
wenigstens zwei an dem Behälterdeckel (5) innenseitig und beabstandet zueinander angeordnete Nuten (9), wenigstens zwei jeweils in den Nuten (9) angeordneten Dichtungen (8) und mit einer Bypasseinrichtung (18) zum Zirkulieren (19) eines Gases, wobei
die Dichtungen (8) berührend derart an den Nuten (9) anliegen, dass zwischen den Dichtungen (8) und den Nuten (9) ein undefiniertes Gasvolumen (17) eingeschlossen ist,
**dadurch gekennzeichnet dass**
die Bypasseinrichtung (18) derart in Verbindung mit wenigstens einer Nut (9) steht, dass das durch die Dichtungen (8) und die Nuten (9) eingeschlossene undefinierte Gasvolumen (17) durch die Bypasseinrichtung (18) entweichen kann.

2. Behälterdeckel (5) nach dem vorhergehenden Anspruch, wobei zwischen den Nuten (9) ein Steg (11) angeordnet ist, dessen Oberfläche wenigstens teilweise gegenüber der Oberfläche der Innenseite des Behälterdeckels (5) in Richtung der Nuten (9) versetzt (15) angeordnet ist, und wobei die Bypasseinrichtung (18) derart in Verbindung mit der versetzten (15) Oberfläche des Stegs (11) steht, dass das undefinierte Gasvolumen (17) hin zur versetzten (15) Oberfläche des Stegs (11) entweichen kann.

3. Behälterdeckel (5) nach einem der vorhergehenden Ansprüche, wobei die Nut (9) rechteckartig ausgestaltet ist und die Bypasseinrichtung (18) im Bereich der Oberfläche der Innenseite des Behälterdeckels (5) abgewandten Ausbuchtung und/oder Ecke der Nut (9) angeordnet ist.

4. Behälterdeckel (5) nach einem der vorhergehenden Ansprüche wobei die Bypasseinrichtung (18) als Bypassnut (20) und/oder Bohrung zwischen dem undefinierten Gasvolumen (17) und der Oberfläche der Innenseite des Behälterdeckels (5) ausgestaltet ist, die Bypasseinrichtung (18) als Verbindungsnut zwischen den Nuten (9) ausgestaltet und/oder die Bypasseinrichtung (18) als sich von der Oberfläche der Innenseite des Behälterdeckels (5) in die Nut (9) hinein erstreckende Ausbuchtung der Nut (9) und/oder als Einlegeteil in die Nut (9) ausgestaltet ist.

5. Behälterdeckel (5) nach einem der vorhergehenden Ansprüche, wobei die Nuten (9) umlaufend, parallel zueinander und in einem Randbereich (10) der Innenseite des Behälterdeckels (5) angeordnet sind.

6. Behälterdeckel (5) nach einem der vorhergehenden Ansprüche, wobei die Nut (9) als Schwalbenschwanznut (9) und/oder die Dichtung (8) als Elastomer O-Ring Dichtung ausgestaltet ist.

7. Behälterdeckel (5) nach einem der vorhergehenden Ansprüche 2 bis 6, wobei ein Teil des Stegs (11) zwischen den Nuten entfernt (Y) ist, mit einem Formteil (12) zum Einsetzen in den entfernten Teil (Y) und wobei die Bypasseinrichtung (18) an dem Formteil (12) angeordnet ist.

8. Behälterdeckel (5) nach dem vorhergehenden Anspruch, wobei die Bypasseinrichtung (18) an einer Stirnfläche des Formteils (12) angeordnet und als zwei sich von der Oberseite des Formteils (12) von einem gemeinsamen Punkt jeweils hin zur Unterseite des Formteils (12) und, bei in den entfernten Teil (Y) eingesetztem Formteil (12), in die Nuten (9) hinein erstreckende Bypassnuten (20) ausgestaltet ist.

9. Transport- und/oder Lagerbehälter, insbesondere Zwischen- und/oder Endlagerbehälter, für kontaminierte und/oder aktivierte Stoffe, umfassend einen einen Behälterboden (3) und wenigstens eine Behälterseitenwand (2) aufweisenden Behälterkörper (1) sowie einen Behälterdeckel (5) nach einem der vorhergehenden Ansprüche, wobei
der Behälterkörper (1) die durch den Behälterdeckel (5) verschließbare Einfüllöffnung (4) aufweist.

10. Transport- und/oder Lagerbehälter nach dem vorhergehendem Anspruch und nach Anspruch 2, wobei der Behälterdeckel (5) die Einfüllöffnung (4) derart verschließt, dass zwischen dem Steg (11) und dem Behälterkörper (1) ein definiertes Gasvolumen (14) eingeschlossen ist, welches mittels der Bypasseinrichtung (18) in Verbindung mit dem undefinierten Gasvolumen (17) steht.

11. Verfahren zum Prüfen der Dichtheit eines mit dem Behälterdeckel (5) verschlossenen Transport- und/oder Lagerbehälters nach einem der beiden vorhergehenden Ansprüche, mit dem Schritt:
a) Evakuieren des definierten und undefinierten Gasvolumens (14, 17).

12. Verfahren nach dem vorhergehenden Anspruch, mit dem Schritt:
b) Ermitteln der Leckagerate des Transport- und/oder Lagerbehälters.

## Claims

1. A container cover (5) to close at least one filling or cover opening (4) in a transport and/or storage container, in particular, a temporary and/or permanent storage container for contaminated and/or activated substances, with
at least two grooves (9) on the inside of the container cover (5) that are arranged at an interval to one another, at least two gaskets (8) each arranged in a groove (9) and a bypass device (18) to circulate (19) a gas, wherein
the gaskets (8) are in touching contact with the grooves (9) in such a way that an undefined gas volume (17) is confined between the gaskets (8) and the grooves (9),
**characterized in that**
the bypass device (18) being connected with at least one groove (9) in such a way that the undefined gas volume (17) confined by the gaskets (8) and the grooves (9) can escape through the bypass device (18).

2. The container cover (5) described in the preceding claim, the grooves (9) having a land (11) arranged between them, at least part of whose surface is set back (15) from the inside surface of the container cover (5), in the direction of the grooves (9), and the bypass device (18) being connected with the set back (15) surface of the land (11) in such a way that the undefined gas volume (17) can escape toward the set back (15) surface of the land (11).

3. The container cover (5) described in one of the preceding claims, in which the groove (9) is rectangular and the bypass device (18) is arranged in the area of the bulge facing away from the inside surface of the container cover (5) and/or from the corner of the groove (9) facing away from it.

4. The container cover (5) described in one of the preceding claims, in which the bypass device (18) is in the form of a bypass groove (20) and/or drill hole between the undefined gas volume (17) and the inside surface of the container cover (5); the bypass device (18) is in the form of a connection groove between the grooves (9); and/or the bypass device (18) is in the form of a bulge in the groove (9) extending from the inside surface of the container cover (5) into the groove (9); and/or the bypass device (18) is in the form of an insert in the groove (9).

5. The container cover (5) described in one of the preceding claims, in which the grooves (9) run parallel to one another around the periphery of the inside of container cover (5), in an edge area (10).

6. The container cover (5) described in one of the preceding claims, in which the groove (9) is in the form of a dovetail groove (9) and/or the gasket (8) is in the form of an elastomer O-ring gasket.

7. The container cover (5) described in one of the preceding claims 2 through 6, in which part of the land (11) between the grooves is removed (Y), with a preformed part (12) to be inserted into [the space left by] the removed part (Y), and in which the bypass device (18) is arranged on the preformed part (12).

8. The container cover (5) described in the preceding claim, in which the bypass device (18) is arranged on a face of the preformed part (12) and designed as two bypass groves (20), each extending from a common point on the top of the preformed part (12) down toward the bottom of the preformed part (12) and, if the preformed part (12) is inserted into [the space left by] the removed part (Y), into the grooves (9).

9. The transport and/or storage container, in particular a temporary and/or permanent storage container for contaminated and/or activated substances comprising a container body (1) having a container bottom (3) and at least one container side wall (2), and a container cover (5) as described in one of the preceding claims,
the container body (1) having the filling opening (4) that can be closed by the container cover (5).

10. Transport and/or storage container described in the preceding claim and in claim 2, in which the container cover (5) closes the filling opening (4) in such a way that the land (11) and the container body (1) confine a defined gas volume (14) between them, which is connected with the undefined gas volume (17) through the bypass device (18).

11. Process for testing the leak-tightness of a transport and/or storage container closed with container cover (5) described in one of the two preceding claims, with the step:
a) Evacuation of the defined and undefined gas volumes (14, 17).

12. The process described in the preceding claim, with the step:
b) Determination of the leakage rate of the transport and/or storage container.

## Revendications

1. Couvercle de récipient (5) pour la fermeture d'au moins une ouverture de remplissage ou de couvercle (4) d'un récipient de transport et/ou de stockage, notamment un récipient de stockage provisoire et/ou définitif pour des substances contaminées et/ou activées, avec
au moins deux rainures (9) agencées sur le couvercle de récipient (5) du côté interne et espacées l'une par rapport à l'autre, au moins deux joints (8) disposés respectivement dans les rainures (9) et avec un dispositif de dérivation (18) pour la circulation (19) d'un gaz, où
les joints (8) sont plaqués contre les rainures (9) en les touchant de sorte qu'un volume gazeux (17) non défini est enfermé entres les joints (8) et les rainures (9),
**caractérisé en ce que**
le dispositif de dérivation (18) est en communication avec au moins une rainure (9) d'une manière telle que le volume gazeux (17) non défini enfermé par les joints (8) et les rainures (9) peut s'échapper par le dispositif de dérivation (18).

2. Couvercle de récipient (5) selon la revendication précédente, où une nervure (11) est disposée entre les rainures (9), dont la surface est décalée (15) en direction des rainures (9) au moins partiellement par rapport à la surface de la face intérieure du couvercle de récipient (5), et où le dispositif de dérivation (18) est en communication avec la surface décalée (15) de la nervure (11) de sorte que le volume de gaz (17) non défini peut s'échapper vers la surface décalée (15) de la nervure (11).

3. Couvercle de récipient (5) selon l'une des revendications précédentes, où la rainure (9) est conçue en forme de rectangle et le dispositif de dérivation (18) est disposé dans la zone d'un renflement opposé à la surface de la face interne du couvercle de récipient (5) et/ou d'un coin de la rainure (9).

4. Couvercle de récipient (5) selon l'une des revendications précédentes, où le dispositif de dérivation (18) est conçu sous la forme d'une rainure de dérivation (20) et/ou d'un alésage entre le volume de gaz (17) non défini et la surface de la face interne du couvercle de récipient (5), le dispositif de dérivation (18) est conçu sous la forme d'une rainure de communication entre les rainures (9), et/ou le dispositif de dérivation (18) est conçu sous la forme d'un renflement de la rainure (9) s'étendant de la surface de la face interne du couvercle de récipient (5) jusqu'à l'intérieur de la rainure (9), et/ou sous la forme d'une pièce insérable dans la rainure (9).

5. Couvercle de récipient (5) selon l'une des revendications précédentes, où les rainures (9) sont disposées de manière circonférentielle, parallèles l'une à l'autre et dans une région de bordure (10) de la face interne du couvercle de récipient (5).

6. Couvercle de récipient (5) selon l'une des revendications précédentes, où la rainure (9) est conçue sous la forme d'une rainure en queue d'aronde (9) et/ou le joint (8) est conçu sous la forme d'un joint en O en élastomère.

7. Couvercle de récipient (5) selon l'une des revendications 2 à 6, où une partie de la nervure (11) est enlevée (Y) entre les rainures, avec une pièce moulée (12) à insérer dans la partie enlevée (Y) et où le dispositif de dérivation (18) est disposé sur la pièce moulée (12).

8. Couvercle de récipient (5) selon l'une des revendications précédentes, où le dispositif de dérivation (18) est disposé sur une surface frontale de la pièce moulée (12) et est conçu sous la forme de deux rainures de dérivation (20) s'étendant à partir de la face supérieure de la pièce moulée (12) partant d'un point commun respectif par rapport à la face inférieure de la pièce moulée (12) et, dans le cas de la pièce moulée insérée (12) dans la partie enlevée (Y), à l'intérieur des rainures (9).

9. Récipient de transport et/ou de stockage, notamment récipient de stockage provisoire et/ou définitif, pour des substances contaminées et/ou activées, comprenant un corps de récipient (1) présentant un fond de récipient (3) et au moins une paroi latérale de récipient (2) ainsi qu'un couvercle de récipient (5) selon l'une des revendications précédentes, où
le corps de récipient (1) présente l'orifice de remplissage (4) pouvant être fermé par le couvercle de récipient (5).

10. Récipient de transport et/ou de stockage selon la revendication précédente, et selon la revendication 2, où le couvercle de récipient (5) ferme l'ouverture de remplissage (4) de telle manière qu'un volume de gaz (14) défini est enfermé entre la nervure (11) et le corps de récipient (1), lequel est en communication avec un volume de gaz indéfini (17) au moyen du dispositif de dérivation (18).

11. Procédé de vérification de l'étanchéité d'un récipient de transport et/ou de stockage fermé avec le couvercle de récipient (5) selon l'une des deux revendications précédentes, avec l'étape :
a) d'évacuation des volumes de gaz défini et non défini (14, 17).

12. Procédé selon la revendication précédente, avec l'étape :
b) d'évaluation des taux de fuite du récipient de transport et/ou de stockage.
